Europäisches Patentamt

European Patent Office

Office européen des brevets

(19)

(11) Veröffentlichungsnummer: **0 248 763**

**A2**

## (12) EUROPÄISCHE PATENTANMELDUNG

(21) Anmeldenummer: **87730057.4**

(22) Anmeldetag: **15.05.87**

(51) Int. Cl.⁴: **H 04 Q 5/02**

(30) Priorität: 26.05.86 DE 3617830

(43) Veröffentlichungstag der Anmeldung:
09.12.87 Patentblatt 87/50

(84) Benannte Vertragsstaaten: **AT BE DE GB**

(71) Anmelder: **Siemens Aktiengesellschaft Berlin und München**
**Wittelsbacherplatz 2**
**D-8000 München 2 (DE)**

(72) Erfinder: **Schüler, Ulrich, Dipl.-Ing.**
**Rhinstrasse 23**
**D-1000 Berlin 49 (DE)**

(54) **Schaltungsanordnung für ein Gesellschaftsleitungssystem.**

(57) Die Erfindung betrifft eine Schaltungsanordnung für eine Fernmeldeanlage, insbesondere Betriebsfernsprechanlage für selbsttätigen Wählverkehr zwischen sämtlichen über Teilnehmer-Übertragungseinrichtungen an eine allen Teilnehmern gemeinsame Gesellschaftsleitung anschaltbaren Teilnehmerendgeräten.

Jedem Teilnehmerendgerät (TEG, TEGn) ist jeweils eine Teilnehmereinrichtung (TE, TEn) und eine die jeweilige Teilnehmereinrichtung (TE, TEn) mit der Gesellschaftsleitung (GL) verbindende Leitungseinrichtung (LE, LEn) zugeordnet, die unter dem Steuereinfluß einer jeweils gemeinsamen Zentraleinheit (ZE) stehen.

Eine derartige Schaltungsanordnung wird für Gesellschaftsleitungssysteme (Partylinesysteme) eingesetzt.

EP 0 248 763 A2

**Beschreibung**

Schaltungsanordnung für ein Gesellschaftsleitungssystem

Die Erfindung betrifft eine Schaltungsanordnung für eine Fernmeldeanlage, insbesondere Betriebsfernsprechanlage, für selbsttätigen Wählverkehr zwischen sämtlichen über Teilnehmer-Übertragungseinrichtungen an eine allen Teilnehmern gemeinsame Gesellschaftsleitung anschaltbaren Teilnehmerendgeräten.

Derartige Fernmeldeanlagen sind in vielfältiger Weise als Wahlruf- und Befehlsanlagen eingesetzt, bei denen von einem Teilnehmerendgerät aus ein oder mehrere andere Teilnehmerendgeräte gezielt angerufen werden können. Die Kommunikation untereinander wird über die allen gemeinsame Gesellschaftsleitung geführt, die dann während eines bestehenden Gesprächszustandes für die nicht an der Verbindung beteiligten anderen Teilnehmerendgeräte gesperrt ist. Dieser Sperrzustand wird beispielsweise durch Einschalten eines Schauzeichens unmittelbar an den nicht am Gespräch beteiligten Teilnehmerendgeräten angezeigt.

Ein weiterer Einsatz derartiger Anlagen ist für die Autobahn- und Straßen-Notrufanlagen vorgesehen, bei denen beispielsweise eine in Not befindliche Person durch Inbetriebnahme der Notrufsäule automatisch die Gesellschaftsleitung bis zum Ort der Notrufabfrage durch Polizei, Feuerwehr oder andere Rettungsdienste belegt.

Wahlrufanlagen weisen darüber hinaus noch sogenannte Kupplungsübertragungen auf, mit denen es möglich ist, die Gesellschaftsleitungen in einzelne Leitungsabschnitte aufzuteilen. Durch geeignete Schaltmaßnahmen können dann - sofern keine Verbindungen über mehrere dieser Leitungsabschnitte bestehen - innerhalb der einzelnen Abschnitte voneinander unabhängige Einzelverbindungen aufgebaut werden; die Gesellschaftsleitung kann in diesem Fall mehrfach ausgenutzt sein.

Die bisher bekannten Fernmeldeanlagen der eingangs definierten Art sind mit besonderen Fernsprechern ausgestattet, die neben den bekannten Nummernschaltern zusätzlich mit sogenannten Gabelübertragungen mit schaltbaren Leitungsnachbildungen versehen sind. Die Leitungsnachbildungen, die der Anpassung der Fernsprechgeräte an die jeweiligen Leitungsverhältnisse dienen, sind für die einzelnen Anlagentypen je nach Leitungs- und Anschlußarten unterschiedlich. Des weiteren sind den einzelnen Fernsprechgeräten jeweils eigene Relaisbeikästen zugeordnet, die sämtliche für die Aufnahme und Erzeugung der für den gewünschten Verbindungsaufbau erforderlichen Zeichen notwendigen Bauelemente, wie Relais, Übertrager, Mitlaufwerke (Wählerrelais) etc. enthalten.

Die der Erfindung zugrunde liegende Aufgabe besteht darin, die Verwendung von einheitlichen Endgeräten für derartige Fernsprechanlagen zu ermöglichen und darüber hinaus die einzelnen Funktionselemente unter Beibehaltung des üblichen Leitungsumfangs mit geringerem Aufwand besser aneinander anzupassen. Erfindungsgemäß wird dies durch die Kombination der Merkmale des Patentanspruchs 1 erreicht.

Mit der konsequenten Verlagerung sämtlicher Funktionen, wie Leitungsanpassung, Wahlerkennung und -umwertung sowie die Stromversorgung des Teilnehmerendgerätes in die Teilnehmereinrichtung und deren Anpassung an die Gesellschaftsleitung durch die Leitungseinrichtung sowie deren gemeinsame Steuerung durch die Zentraleinheit ist erreicht, daß die Teilnehmerendgeräte nicht mehr an die unterschiedlichen Leitungs- und Anschlußarten angepaßt sein müssen, sondern als normale Zweidrahtfernsprecher mit Nummernscheibe (Impulswahl) oder mit der heute üblichen Tastwahltastatur für das MFV-Wahlverfahren eingesetzt werden können. Als wesentlich für die Erfindung ist in diesem Zusammenhang anzusehen, daß die Sende- und Empfangsrichtung zwischen der jeweiligen Leitungseinrichtung und der entsprechenden Teilnehmereinrichtung galvanisch voneinander getrennt sind und somit die Anpassung des Teilnehmerendgerätes an die Gesellschaftsleitung, insbesondere im Hinblick auf die Störbeeinflussung der Leitungen durch äußere Einflüsse, durch entsprechende Dimensionierung der Empfangs- und Sendeverstärker innerhalb der Teilnehmereinrichtungen und der jeweiligen Leitungseinrichtungen in einfacher Weise erfolgen kann. Die für jede Verbindung - Teilnehmerendgerät, Gesellschaftsleitung -vorgesehene Zentraleinheit, die die Teilnehmereinrichtung und die entsprechende Leitungseinrichtung steuert, stellt sicher, daß im Störungsfall nur die auf ein Teilnehmerendgerät bezogenen Schalteinrichtungen funktionsunwirksam geschaltet werden müssen und somit die restlichen Teilnehmerendgeräte bis auf die gestörte Einheit ohne Beeinträchtigung weiter betrieben werden können.

Eine vorteilhafte Ausgestaltung der Erfindung sieht vor, daß die Schaltunganordnung mit einer Wartungsfunktion der angeschalteten Teilnehmereinrichtungen und der entsprechenden Leitungseinrichtungen steuernden Diagnose-Baugruppe ausgestattet ist, die mit der Zentraleinheit zum Austausch externer Ein- und Ausgaben von Daten und Adressen über eine serielle Schnittstelle verbunden ist. Mit dieser Diagnose-Baugruppe können in Verbindung mit der seriellen Schnittstelle der Zentraleinheit Prüfroutinen ablaufen, mit denen die gesamte Anlagenkonfiguration entweder im Bedarfsfall oder routinemäßig überprüft werden kann. Die Ergebnisse können beispielsweise durch einen angeschalteten Drucker schriftlich dokumentiert werden.

Die Erfindung wird in einem figürlich ausgeführten Ausführungsbeispiel näher erläutert, in dem lediglich die zur Funktion notwendigen Schalteinrichtungen als Blockschaltbild dargestellt sind.

Die Teilnehmerendgeräte TEG, TEGn sind jeweils über die Teilnehmereinrichtung TE, TEn und die dazugehörige Leitungseinrichtung LE, LEn mit der für alle Teilnehmerendgeräte TEG, TEGn gemeinsamen Gesellschaftsleitung GL verbunden. Im Ausführungsbeispiel sind lediglich die zu dem Teilnehmerendgerät TEG gehörigen weiteren Schalteinheiten, wie die Zentraleinheit ZE und der Umrichter UMR dargestellt, während die für die weiteren Teilnehmerendgeräte TEGn identisch benötigten gleichen Schalteinrichtungen nur zum Teil angedeutet sind. Dabei weist die Zentraleinheit ZE die mit der Leitungseinrichtung LE und der Teilnehmereinrichtung TE gemeinsam parallele Schnittstelle PS auf, während die weitere serielle Schnittstelle SS in Verbindung der Zentraleinheit ZE und der Diagnose-Baugruppe DBG vorhanden ist. Durch die unterbrochene Strichlinie der Diagnose-Baugruppe DBG ist angedeutet, daß diese Schalteinrichtung lediglich im Bedarfsfall vorhanden ist und nicht zur Grundausstattung für Fernmeldeanlagen mit Gesellschaftsleitungssystemen gehört.

Der Umrichter UMR dient zur Erzeugung der benötigten Steuerspannungen U1, U2, U3 und stellt gleichzeitig den Rufwechselstrom von 25 Hz für das entsprechende Teilnehmerendgerät TEG zur Verfügung. Außerdem ist ersichtlich, daß die Teilnehmereinrichtungen TE, TEn mit den entsprechenden Leitungseinrichtungen LE, LEn in Sende- und Empfangsrichtung jeweils getrennt miteinander verbunden sind, so daß die Anpassung der Teilnehmerendgeräte TEG, TEGn an die Gesellschaftsleitung GL, die in diesem Fall wie die Teilnehmerendgeräte TEG, TEGn zweidrähtig ausgeführt ist, in einfacher Weise durch den Einsatz entsprechender Sende- und Empfangsverstärkereinrichtungen innerhalb der Teilnehmereinrichtungen TE, TEn und der Leitungseinrichtungen LE, LEn vorgenommen werden kann.

Die Gesprächsverbindung zwischen den beiden dargestellten Endgeräten TEG und TEGn wird wie folgt aufgebaut. Mit dem Abheben des Handapparates vom Teilnehmerendgerät TEG wird in bekannter Weise z. B. bei den Mehrfrequenz-Wahlverfahren ein Wählton angeschaltet und das sogenannte Belegungszeichen zur Gesellschaftsleitung GL übertragen. Durch dieses Belegungskennzeichen werden alle anderen Teilnehmerendgeräte gegen die gehende Belegung gesperrt und sofern die Teilnehmerendgeräte mit Schauzeichen ausgerüstet sind, werden diese außer das beim Anrufer und das beim Gerufenen erregt. Anschließend wird von dem Teilnehmerendgerät TEG die gewünschte Rufnummer des Teilnehmers TEGn gewählt, die zu allen ebenfalls an der Gesellschaftsleitung GL angeschlossenen Teilnehmerendgeräten übertragen wird. Die empfangene Rufnummer wird dann mit der eigenen Rufnummer innerhalb der jeweiligen Teilnehmereinrichtung TE verglichen und lediglich bei dem gewünschten Teilnehmerendgerät TEGn der 25 Hz Rufstrom durchgeschaltet. Gleichzeitig wird von dem gerufenen Teilnehmerendgerät TEGn Rufton zu dem anrufenden Teilnehmerendgerät TEG übertragen. Nach dem Melden des gerufenen Teilnehmers TEGn wird in bekannter Weise das Meldekennzeichen übertragen und somit der Rufton abgeschaltet. Die Gesprächsverbindung zwischen dem anrufenden Teilnehmerendgerät TEG und dem gerufenen Teilnehmerendgerät TEGn ist somit hergestellt.

Wird bei Gesprächsende der Handapparat beim anrufenden Teilnehmerendgerät TEG aufgelegt, so erfolgt in bekannter Weise das Aussenden des Auslösezeichens zur Gesellschaftsleitung GL, und damit die Rücknahme der Sperrung für alle anderen nicht dargestellten Teilnehmerendgeräte. Das gerufene Teilnehmerendgerät TEGn erhält bis zum Auflegen seines Handapparates den Besetztton.

Wird dagegen beim gerufenen Teilnehmerendgerät der Handapparat zuerst aufgelegt, so wird kein Auslösezeichen zum Entsperren auf die Gesellschaftsleitung gegeben, so daß der gerufene Teilnehmer nach erneutem Abheben seines Handapparates wieder mit dem rufenden Teilnehmerendgerät TEG verbunden ist.

Durch entsprechende Organisationen der Rufnummern können von den einzelnen Teilnehmerendgeräten aus auch Gruppenrufe erzeugt werden, bei denen in gleicher Weise wie bei der oben beschriebenen Zweierverbindung dann mehrere Teilnehmerendgeräte gerufen und entsprechend miteinander verbunden werden können. Auch der sogenannte Sammelruf, der Anruf an alle an die Gesellschaftsleitung GL angeschalteten Teilnehmerendgeräte TEG... wird in gleicher Weise realisiert.

Innerhalb der Fernmeldeanlage können für ein oder mehrere Teilnehmerendgeräte - im Ausführungsbeispiel ist dies nur für das Teilnehmerendgerät TEG vorgesehen - sogenannte Diagnose-Baugruppen DBG eingesetzt sein, mit deren Hilfe die Anlagenkonfiguration entweder im Bedarfsfall oder routinemäßig abgeprüft werden kann. Durch prüfmodifizierte Schaltvorgänge werden die Teilnehmereinrichtungen TE und die Leitungseinrichtungen LE veranlaßt, auch ohne die Einschaltung der Teilnehmerendgeräte TEG die zum Verbindungsaufbau notwendigen Schalt- und Steuerkriterien abzugeben, so daß beispielsweise von einem Teilnehmerendgerät TEG aus das ordnungsgemäße Funktionieren der Leitungseinrichtungen LEn und Teilnehmereinrichtungen TEn der weiteren Teilnehmerendgeräte TEGn abgeprüft werden können.

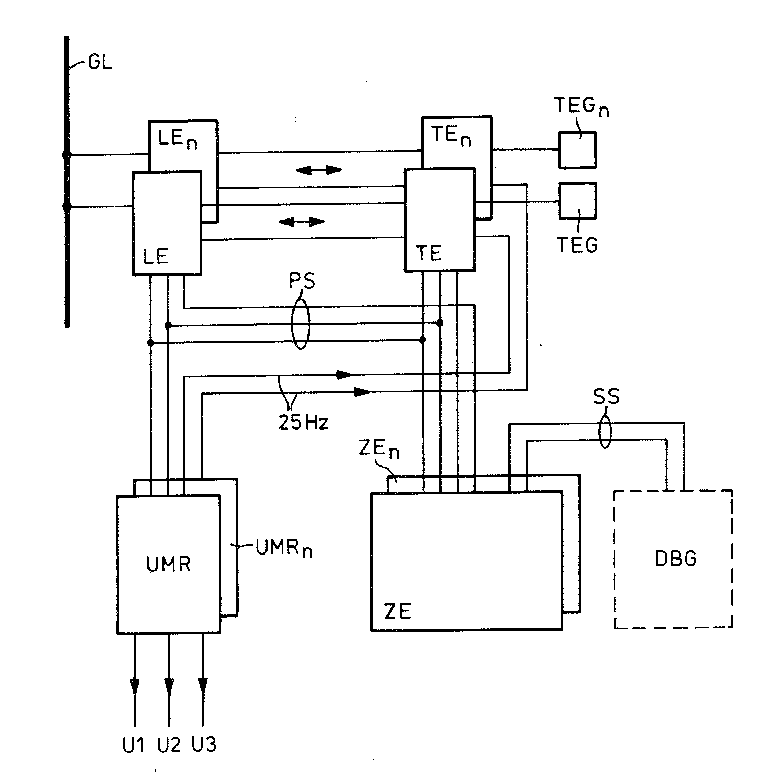

## Patentansprüche

1. Schaltungsanordnung für eine Fernmeldeanlage, insbesondere Betriebsfernsprechanlage, für selbsttätigen Wählverkehr zwischen sämtlichen über Teilnehmer-Übertragungseinrichtungen an eine allen Teilnehmern gemeinsame Gesellschaftsleitung anschaltbaren Teilnehmerendgeräten, **gekennzeichnet durch** die Kombination der Merkmale

1.1 jede Teilnehmer-Übertragungseinrichtung ist aus einer Teilnehmereinrichtung (TE), die das jeweilige Teilnehmerendgerät (TEG) steuert und aus einer Leitungseinrichtung (LE), die die Teilnehmereinrichtung (TE) mit der Gesellschaftsleitung (GL) verbindet, gebildet,

1.2 die Teilnehmereinrichtung (TE) und die Leitungseinrichtung (LE) sind von einer gemeinsamen Zentraleinheit (ZE) steuerbar,

1.3 die Teilnehmerendgeräte (TEG) sind durch einen Zweidraht-Fernsprecher mit Nummernscheibe (Impulswahlverfahren) oder mit MFV-Wähltastatur (Mehrfrequenzverfahren) realisiert,

1.4 die Leitungseinrichtung (LE) ist mit der Teilnehmereinrichtung (TE) in Senderichtung und in Empfangsrichtung jeweils separat verbunden.

2. Schaltungsanordnung nach Anspruch 1, **gekennzeichnet durch** die Merkmale

2.1 die Schaltungsanordnung ist mit einer Wartungsfunktion der angeschalteten Teilnehmereinrichtungen (TE) und Leitungseinrichtungen (LE) steuernden Diagnose-Baugruppen (DBG) ausgestattet,

2.2 die Zentraleinheit (ZE) weist zur Ein- und Ausgabe externer Daten und Adressen eine serielle Schnittstelle (SS) auf.